# EUROPEAN PATENT SPECIFICATION

(11) **EP 3 477 425 B1**
(45) Date of publication and mention of the grant of the patent: **16.09.2020**
(21) Application number: 18151438.1
(22) Date of filing: 12.01.2018
(51) Int. Cl.: G06F 1/26, G06F 1/32

(54) **COMPUTER SYSTEM, CLIENT DEVICE AND DISPLAY DEVICE**
COMPUTERSYSTEM, CLIENT-VORRICHTUNG UND ANZEIGEVORRICHTUNG
SYSTÈME INFORMATIQUE, DISPOSITIF CLIENT ET AFFICHEUR

(30) Priority: 27.10.2017 DE 102017125284
(43) Date of publication of application: 01.05.2019
(73) Proprietor: Fujitsu Client Computing Limited, Kawasaki-shi, Kanagawa-ken 211-8588 (JP)
(72) Inventor: Chen, Angel, 80807 München (DE); Schweinfort, Johann, 80807 München (DE); Maier, Andreas, 80807 München (DE)
(74) Representative: Epping - Hermann - Fischer

(56) References cited:
- EP-A1- 1 672 460
- WO-A1-2015/112180
- US-A1- 2009 094 386

## Description

The present invention relates to a computer system comprising a client device and a display device operationally connected to the client device. Specifically, the present invention relates to a so-called all-in-one mode of a display device in combination with a client computing device.

### Background

Usually a client device, for example a personal computer (PC), and a display device, such as a flat screen display device, are equipped with separate power buttons and LED status indicators, which operate independently from each other. For example, the action of pressing the display's power button will only turn off the display device but will not influence the PC's power state.

Especially with small form factor client devices, such as mini PCs or thin clients, which are mounted under the table or behind the screen of a display device, for example by using a VESA mounting kit, there is no direct access to the power button of the client device, and the status LED, also called power LED, of the client device is not in the user's field of view. In the current situation, when the PC and the display device are controlled separately, it may be difficult to change the PC's power state and/or to ascertain the PC's power state.

Using some specific keyboards with an integrated power button, it may be possible to control the power state of the PC. However, those keyboards do not have an LED indication to reflect the current PC power state. Thus, pressing the power button on the keyboard could lead to unintended, even opposite reactions of the PC. For example, a user is expecting the PC to be in a sleep state, because the display device is showing a black screen. However, the PC might actually be in an active state and the screen of the display device may only be black because no active signal was found after a certain amount of time. If the user wants to wake up the PC by pressing the power button, instead he or she will actually send the PC to the sleep state in this situation. This will lead to confusion for the user, especially because there is no visible LED indicator to reflect the current PC power stage.

WO 2015/112180 A1 relates to a device including a data bus port to receive power from an external source. A controller can monitor the power terminals of the data bus port for a power state control signal. The controller may determine if a second controller on an external source generated a power state control signal transmitted through the power terminals providing power to the computing device in response to activation of a power button on the external source. Monitoring the power terminals of the data bus requires the presence of additional hardware, such as a controller connected to the power terminal, and may not be compatible with legacy systems not supporting the USB power delivery protocol.

### Summary of the invention

Accordingly, the present invention aims to provide alternative and/or improved computer systems that allow to control and, optionally, ascertain the current power state of a client device.

The invention is defined by the independent claims. Further aspects of the invention are outlined in the dependent claims. If the term embodiment is used for describing unclaimed combinations of features, the term should be understood as referring to examples useful for understanding the present invention.

According to the present invention, this problem is solved by a computer system comprising a client device, in particular a client computing device such as a thin client PC or a mini PC, and a display device, in particular a flat screen display device, operationally connected to the client device by means of a Universal Serial Bus (USB) interface. The display device comprises at least one power control device, in particular a power button and/or user presence sensor, configured to, upon activation of the at least one power control device, change an operating state of the client device by sending at least one predefined Human Interface Device (HID) command or a resume signal over the USB interface to the client device.

According to an improved embodiment, the display device further comprises at least one power indication device, in particular at least one status LED, configured to indicate a current operating state of the client device.

The idea underlying the present invention is to use the display's power button and, optionally, LED status light to control and, optionally, indicate the client device's power state.

In this way, the display device's behavior and the client device's behavior of the power button and the LED are synchronized. This improves the user experience of the client device and display device combination and is beneficial especially if the client device cannot be directly accessed by the user, for example because it is mounted behind the display device or under the table, etc.

According to embodiments of the present invention, this behavior may be implemented as follows:
The display device can send pre-defined human interface device (HID) commands to the client device, for example by using the USB protocol, to put the PC into a sleep state or other energy saving state, once the power button of the display device is pressed in an active state of the client device.

Moreover, the display device may send a specified "resume" signal to the client device to wake up the client device, for example a USB resume signal, once the power button is pressed again in a sleep state or other energy saving state of the client device.

For easier reference, any operating state of the client device having a typical power consumption below that of a normal operating state, in particular the ACPI state S0, is considered to represent an energy saving state, in particular the standard ACPI states S1 to S5, as well as any vendor specific energy saving states.

For example, a display device could control the power state of a PC from ACPI state S0 ("active", or "working" or "normal operating") to ACPI state S3 ("standby", "sleep" or "suspend to RAM") and/or to ACPI state S5 ("off", "soft-off", or "switched-off") by means of a display power button at the front side of the display device. In different PC and display states, the power button triggers different control signals, e.g. HID reporting commands or a resume signal, to the source side, i.e. the client device, by USB signaling.

Moreover, it is possible to combine a display device comprising a proximity sensor, also known as presence sensor, and a USB interface, preferably a USB Type-A or Type-C interface, which extends the security protection from the display device to PC devices. Using a list of pre-defined HID commands, corresponding commands could be recognized easily and widely by PCs and laptops, and would not be limited to devices of a specific manufacturer.

In at least one embodiment, the display can detect the PC's power state automatically, for example based on a power consumption level of the client device or control signals. With both alternatives, the display device is always able to recognize the client's device power state.

For example, a power delivery controller will detect the state of an external PC by a power drawing load for each different state. The load may be measured by establishing a current drawn at a supply interface, or may be established by analyzing requests for power according to a power delivery protocol. Based on this result, the power delivery controller could be the master side to notify a display scaler to reflect the current state of PC side on a LED indicator at the display front bezel. For example, a power delivery controller integrated into the display device may detect whether the current power consumption level lies below or above one or more predefined thresholds. For example, a power consumption of less than 1 Watt could indicate that the client device is switched off. A power consumption of between 1 and 5 Watt could indicate that the client device is in a sleep state. A power consumption in excess of 5 Watt could indicate an active operating state of the client device.

In an alternative embodiment, the client device can transmit control information to the display device to inform the display device of a selected operating mode and/or control the behavior of the status LED or power button of the display device directly. For example, the client device can send a proprietary HID commands via a standard USB interface, e.g. a USB Type-A interface, comprising information for a specified LED or power button. For example, when the PC changes from the ACPI state S0 to the ACPI state S3, the BIOS system of the client device will send a specified USB HID command to the display device. With this information, the display device is able to set the correct behavior for the status LED and power button behavior, for example it may switch the status LED into a blinking mode. Besides, the display power button can also control the PC ("active" to "turn-off", or "turn-off" to "turn on") based on the current PC state to decide what kind of command is working to change the PC state.

In at least some embodiments, the data required for power control and power state is signaled using the USB human interface device (HID) class, rather than the USB monitor control class. The USB monitor control class only defines a protocol for user control such as brightness, contrast, size and position. Using the HID report system instead, user devices such as keyboards and/or mice can be emulated by the display device and used to interact with a power control subsystem of the client device to activate a specific operating state or mode of the client device, for example working, sleep, hibernate, standby, soft-off etc., or to signal specific state or mode changes, like shutdown or wake-up.

As described in more detail later, the HID commands can be transmitted and received by a specific display internal controller, for example, a billboard device of a power delivery solution of the display device, an all-in-one integrated USB Type-C controller, or a HID control device integrated into a USB hub controller of the display device. A power delivery controller can also be used to translate the display device internal commands to HID standard commands to wake-up or force a PC into a sleep state or mode. Alternatively or in addition, the client device may also communicate with the display device using proprietary control signals, such as vendor defined messages (VDM) as provided by the USB Power Delivery Standard Revision 3.0.

For USB HID usage tables and specification concerning the HID commands, reference is made to the respective USB specification available from www.usb.org, in particular for USB 1.0, 1.1, 2.0, 3.0, 3.1 and 3.2.

### Brief description of the drawings

The present invention will be described in more detail below with respect to the following figures. Therein, the same reference symbols are used for the same or similar components of different embodiments of the present invention.
Figure 1 shows a block diagram of an exemplary embodiment of a computer system according to the present invention.
Figure 2 shows a block diagram of internal components of a display device connected to a client device according to an embodiment of the present invention.
Figure 3 shows a first flowchart of a first operating method according to an embodiment of the present invention.
Figure 4 shows a second flowchart of a second operating method according to an embodiment of the present invention.
Figure 5 shows a third flowchart of a third operating method according to an embodiment of the present invention.

### Detailed Description

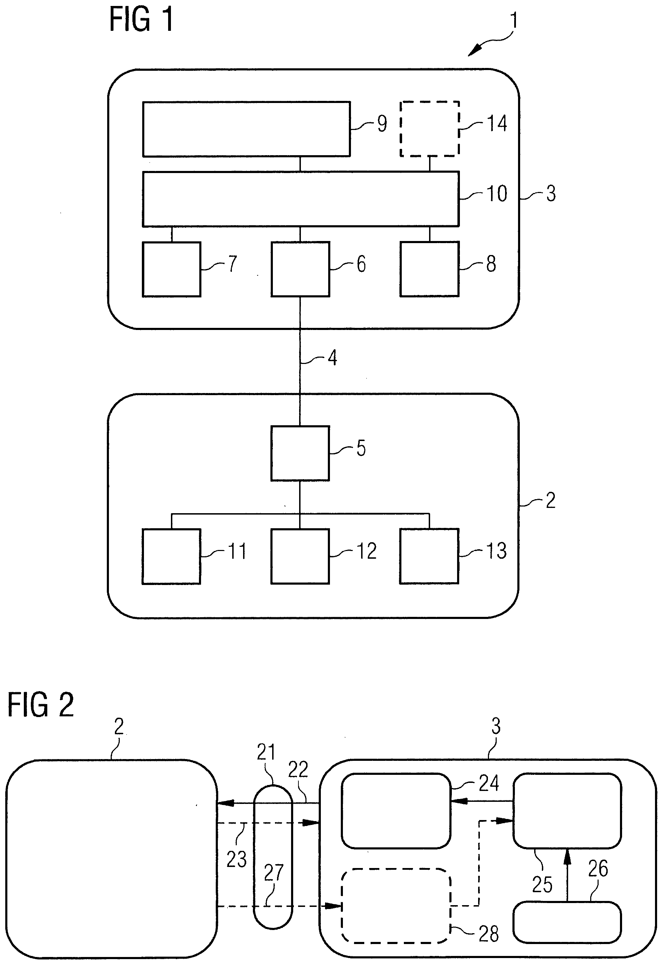

Figure 1 shows an exemplary embodiment of a computer system 1 according to the present invention. The computer system 1 comprises a client device 2 such as a mini PC or a thin client device, and a display device 3 such as a flat screen LCD display device. The client device 2 and the display device 3 are connected by means of a data connection 4. For example, the client device 2 and the display device 3 may be connected by means of a full featured USB Type-C cable, comprising a plurality of wires for enabling USB data paths, transferring video data using a display port connection and for providing power from the display device 3 to the client device 2 by means of a power delivery standard. The data connection 4 is attached to the client device 2 by means of a first interface 5, in particular a first USB interface, and to the display device 3 by means of a second interface 6, in particular a second USB interface. In the described embodiment, the client device 2 is connected to the display device 3 using only a single cable, which is used to supply the client device 2 with an operating energy provided by the display device. Alternatively, several cables may be used, e.g. a combination of conventional display and USB Type-A cables. The client device 2 may be obscured partly or in total by the display device 3.

The display device 3 comprises a power button 7, a status LED 8, a display screen 9 and control circuitry 10. The client device 2 comprises a processor 11 for executing user programs as well as an operating system, driver and firmware components, a graphics component 12 for generating graphical output to be displayed by the display screen 9 and a power management subsystem 13 to control the operating state of the client device 2. The graphics component 12 and the power management subsystem 13 may be implemented in hardware or in software or a combination thereof. For example, the power management subsystem 13 may comprise parts of a system firmware for ACPI control, such as a BIOS, parts of an operating system and hardware components used to activate or deactivate individual components or subcomponents of the client device 2.

In operation of the computer system 1, power control commands received by the display device 3 via the power button 7 are forwarded by the control circuitry 10 via the data connection 4 to the power management subsystem 13 of the client device 2. Inversely, the power state of the client device 2 is communicated via the data connection 4 to the control circuitry 10 of the display device 3 and indicated using the status LED 8.

According to one embodiment, the behavior of the power button 7 may be as follows. By pressing the power button 7 of the display device 3, it will send a HID command to put the connected client device 2 into a predefined energy saving state like the ACP state S3. The actual state may, however, depend on power settings, defined for example in the operating system run by the client device 2. By pressing the power button 7 of the display device 3 again, it will wake up the connected client device 2 from its sleep state using a resume signal, in particular a USB resume signal.

Instead of sending a single HID command to the client device 2 for activating a single, predefined energy saving state, the control circuitry 10 of the display device 3 can also determine how long the power button 7 was pressed. If it was pressed for less than two seconds, then a first HID command for activation of a first energy saving state is sent, for example to switch the client device 2 into a sleep state, i.e. ACPI S3. If the power button 7 is pressed for more than two seconds, then a second HID command for activation of a second energy saving state like is sent, for example for shutting down the client device 2 to a soft off state, i.e. ACPI S5, or for activating a hibernate state, i.e. ACPI S4.

In another embodiment, instead of a manual push button, such as the power button 7, an optional presence sensor 14 integrated into the display device 3 may be used for automated power saving and/or locking of the client device 2. Instead of manually pressing the power button 7 to control the power state of the client device 2, the user presence sensor 14, also called human presence or proximity sensor, integrated into the display device 3 can be used to automatically send appropriate HID commands and/or USB resume signals to the client device 2. In this case, if the user leaves a detection area of the presence sensor 14, then a part of the control circuitry 10 of the display device 3, such as a scaler IC, will send a HID command for "lock PC" or "sleep" to the client device 2 automatically after a predefined time period, for example after 30 seconds of user absence. If the user re-enters the detection area of the presence sensor 14, then the display device 3 will send the USB resume signal to the client device 2 automatically, to wake up the computer system 1 and to show the log-on screen of the client device 2 without any further user intervention.

The behavior of the status LED 8 of the display device 3 may be as follows. If the client device 2 is in a sleep state, then the status LED 8 of the display device 3 will start blinking to indicate the sleep state of the client device 2 to the user. If the client device 2 is in an active working state, then the status LED 8 of the display device 3 will be illuminated continuously to indicate this state.

Preferably, the status LED 8 of the display device 3 should behave the same way as a status LED of the client device 2, if such a status LED is present in the client device 2.

An additional, optional feature may make use of different colors of the status LED 8. If a compatible client device 2 is detected, for example a client device 2 of the same manufacturer as the display device 3 supporting the above mentioned exchange of power control commands and states, then the color of the status LED 8 will be changed from a first color specific for a standalone operating mode of the display device 3, for example blue, green or amber, to a second color specific to the status indicator of the client device 2, for example white, to indicate a so-called "all-in-one mode" to the user of the computer system 1 (instead of the display device's 3 standalone operating mode).

Figure 2 shows a block diagram of internal components of a display device 3 connected to a client device 2 according to an embodiment of the present invention. Specifically, Figure 2 shows a schematic diagram of the various data paths within the display device 3. The block diagram of Figure 2 shows, in particular, those parts of a chip set of a display device 3 that are responsible for exchanging information with the client device 2 for power control and indication.

In the described embodiment, the client device 2, acting as a source for a display signal, and the display device 3, acting as a sink for the display signal, are connected by a USB interface 21, for example a USB Type-A or Type-C data cable. The USB interface 21 comprises a first control path 22 for sending control signals from the display device 3 to the client device 2, and an optional second control path 23 for sending control signals from the client device 2 to the display device 3. On the side of the display device 3, both control path 22 and 23 end at a USB hub 24. The USB hub 24 comprises an internal component, such as a microcontroller, for providing native HID support, i.e. for transmitting and receiving control commands according to the USB HID device class. Alternatively, a further component providing HID support can be connected internally to a conventional USB hub (not shown in Figure 2). As described below, such functionality may also be provided by other components of the display device, such as a power delivery controller or a so-called billboard device of a Type-C USB interfaces.

The display device 3 further comprises a scaler 25 for scaling the display signal provided by the client device 2 and a user interface 26 for displaying the display signal to a user of the client device 2. The scaler 25 represents the main processing unit inside the display device 3. The user interface 26 is also used for displaying and controlling the operating state of the display device 3 and, according to the described embodiment, the client device 2. For example, the user interface 26 may comprise the power button 7, the status LED 8, the display screen 9, and the optional presence sensor 14 of the display device 3 according to Figure 1. It may further comprises other components for user interaction, such as an on-screen display (OSD) menu and corresponding OSD buttons, or a webcam (not shown). The user interface 26 is connected with the scaler 25 by a suitable first control interface, for example a first I²C bus and/or one or more dedicated control lines connected to corresponding general purpose I/O (GPIO) pins of the scaler 25. Similarly, the scaler 25 and the USB hub 24 are connected by a second control interface, for example a second I²C bus.

In operation, a power control device of the user interface 26 may generate a control signal indicating the activation of the power control device to the scaler 25. The scaler will monitor said control signal and generate a further control signal indicating a mode change of the display device to the USB hub 24. In turn, the USB hub 24 will receive said further control signal and translate it into a corresponding USB HID command or USB resume signal and send it via the first control path 22 to the client device 2 to request a corresponding mode change.

Optionally, the client device 2 can send further USB HID commands back to the display device using the second control path 23. Such USB HID commands may be proprietary or vendor specific and can be used to inform the scaler 25 of the current operating state of a compatible client device 2. The scaler 25 may then indicate said operating state through the user interface 26 to a user, for example by means of the status LED 8.

Alternatively or in addition, the USB interface 21 may also comprise a power delivery path 27. Moreover, the display device 3 may comprise a load detection circuit 28 connected to the power delivery path 27 and to the scaler 25. The connection between the scaler 25 and the load detection circuit 28 may also be implemented by means of an I²C bus, for example the second I²C bus. The load detection circuit 28 may either act as a master or slave device on the I²C bus. In operation, the load detection circuit 28 can monitor the amount of power drawn by any client device 2 via the USB interface 22 and determine an actual operation state of the client device 2 based on a comparison of the power drawn by the client device 2 with one or more thresholds.

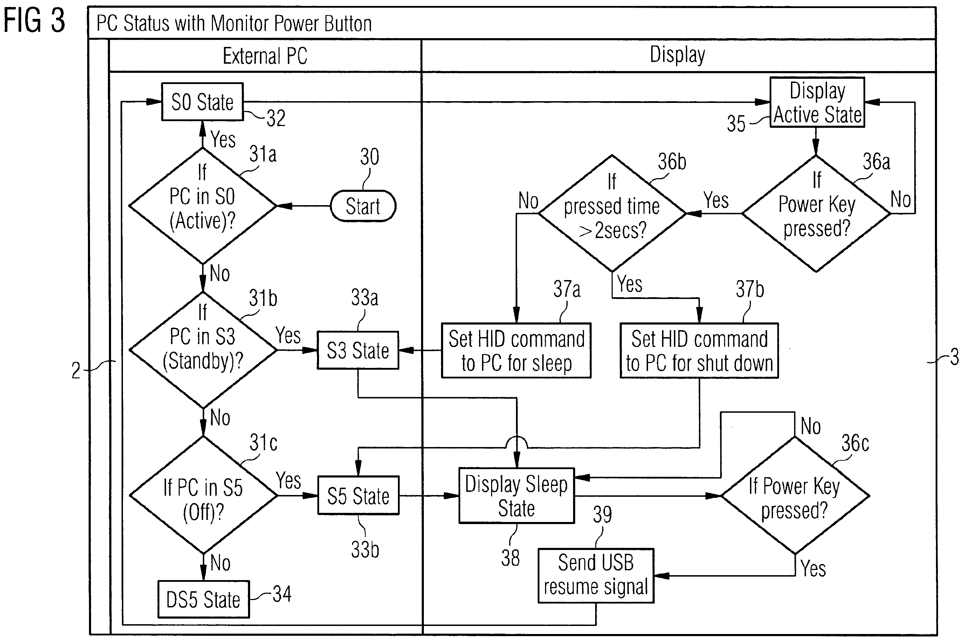

The operation of various inventive embodiments is described in more detail below with regard to the flowcharts provided in Figures 3 to 5.

Figure 3 shows a flowchart of a method for operating the computer system 1. Therein, the states and actions of a client device 2 in the form of an external PC are shown on the left-hand side, whereas the states and actions of the display device 3 are shown on the right-hand side.

Upon initialization of the control method (box 30), the client device 2 first establishes (box 31a) whether it is in a fully operational state, i.e. ACPI state S0 (box 32), or another state. In the latter case, the client device 2 further establishes (box 31b) whether it is in a first energy saving state, e.g. ACPI state S3 (box 33a) or another energy saving state. In the latter case, the client device 2 further establishes (box 31c) whether it is in a second energy saving state, e.g. ACPI state S5 (box 33b), or a vendor specific deep sleep state DS5 (box 34), with a particular low power consumption not defined in the ACPI standard. In the deep sleep state DS5, all external interface of the client device 2 are deactivated. Accordingly, in this mode it is not possible to wake up the client device 2 using a USB interface 26 to the external display device 3.

If the client device 2 is in the ACPI state S0 (box 32), the display device 3 will enter a "display active" state (box 35). The display device 3 will remain in the "display active" state until the power button 7 is pressed (box 36a). Upon release of the power button 7, the display device 3 will determine how long the power button 7 was depressed (box 36b). If it was pressed down for less than two seconds, the display device 3 will send a first HID command to the client device 2 to switch the client device 2 into a sleep state (box 37a). In response, the client device 2 will enter the first energy saving mode, i.e. the ACPI state S3 (box 33a).

If the power button 7 was pressed down for more than two seconds, the display device 3 will send a second HID command to the client device 2 to shut-down the client device 2 (box 37b). In response, the client device 2 will enter a second energy saving mode, i.e. the ACPI state S5 (box 33b).

The display device 3 may automatically detect that the client device 2 has entered the corresponding state successfully based on a power consumption of the client device 2 or based on control signaling between the client device 2 and the display device 3, such as the provision of a corresponding vendor defined message (VDM) from the client device 2 to the display device 3. Once the client device 2 has successfully entered one of the energy saving states, the display device will enter a corresponding "display sleep" state (box 38).

The computer system 1 will remain in this state until a user presses the power button 7 of the display device 3 again (box 36c). If such an event is detected, the display device 3 will send a USB resume signal to wake the client device 2 up (box 39). The USB resume signal is defined in the underlying USB standard, independent of the specific definition of the HID device class, and comprises switching the polarity of data lines D+ and D- of the USB interface 21 for a predetermined amount of time. The USB resume signal will be received and analyzed by the client device 2, for example its power management subsystem 13, and triggers a state change into the ACPI state S0 (box 32). This state change will again be detected by the display device 3 based on the power consumption of the client device 2 or may be actively communicated from the client device 2 to the display device 3. In either way, the display device 3 will move into the "display active" state (box 35), where it remains until the power button 7 is pressed again.

A user of the client device 2 may also activate the ACPI state S3 (box 33a) or any other operating state of the client device 2 manually by selecting a corresponding control element of a user interface of the client device 2 or timer-based by configuring the power management subsystem 13 accordingly.

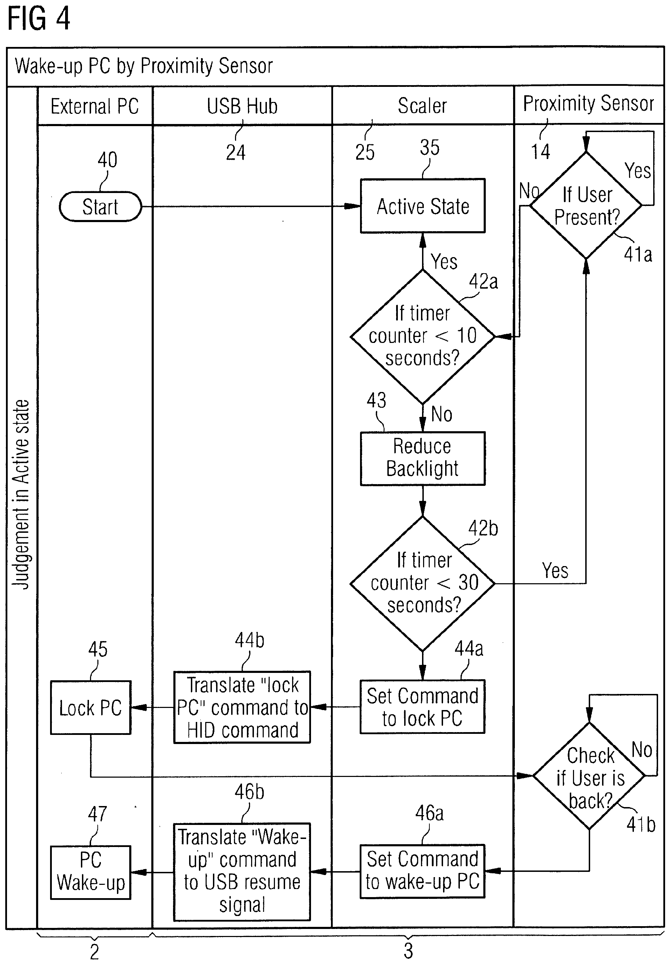

Figure 4 shows a flowchart of an alternative operating method for a computer system 1 according to the present invention.

In the described embodiment, the display device 3 comprises a presence sensor 14 for monitoring a working area in front of a display screen 9, a USB hub 24 and a scaler 25. The power management of the client device 2 is automated based on the output of the presence sensor 14 as detailed below.

Assuming that the client device 2 is initially active (box 40), the display device 3 will also remain in an active state (box 35) as long as the presence of a user is detected by the proximity sensor 14 (box 41a). In the case that the user leaves the detection area, a timer will be initialized. For the first ten seconds of the timer running (box 42a), the computer system 1 remains in the active state (box 35). If the ten seconds have elapsed, the backlight of the display screen 9 will be reduced (box 43). Meanwhile the timer continues to run. If a return of the user is detected before 30 seconds of the time have elapsed (box 42b), the timer is reset and the display device 3 returns to the active state (box 35), i.e. increases the backlight to a predefined setting.

However, after 30 seconds of the timer without the detection of a user presence (box 42b), the scaler 25 of the display device 3 will send an internal "lock PC" command to the USB hub 24 (box 44a) of the display device 3. The USB hub 24 will translate the "lock PC" command to an HID command according to the USB HID profile (box 44b), which will then be communicated via the first USB control path 22 to the client device 2. In response, the power management subsystem 13 of the client device 2 will lock the client device 2 (box 45), for example by activating a lock screen of the operating system or by activating a predefined energy saving state.

The client device 2 will remain in this state until the presence sensor 14 (box 41b) detects that the user has returned into the working area. In this case, the scaler 25 will send a corresponding internal "wake-up" command to the USB hub 24 (box 46a). The USB hub 24 will translate the "wake-up" command into a USB resume signal (box 46b), which will be transmitted to the client device 2. In response, the client device 2 will be woken up (box 47), for example by leaving the predefined energy saving state and/or displaying a log-in screen for the user, allowing the user to enter a password to unlock the PC.

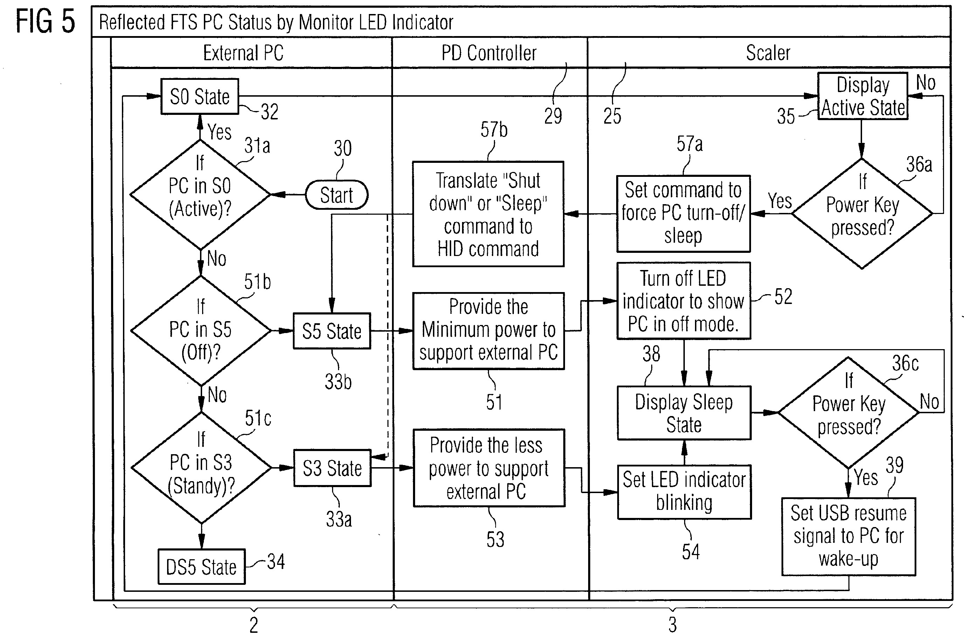

Figure 5 shows a further flowchart of an operating method for a computer system 1 according to an inventive embodiment. The operating method depicted in Figure 5 is similar to the operating method explained above with regard to the flowchart of Figure 3. However, it comprises further implementation details of a communication between the client device 2 and the display device 3 via a display internal power delivery controller 29. Figure 5 also shows how the status LED 8 of the display device 3 can be controlled by the client device 2. The description of those steps already described above with reference to Figure 3 is not repeated here.

As before, the client device 2 can be operated in a number of different power states, in particular, in the standard ACPI states S0 (box 32), S3 (box 33a) and S5 (box 33b), as well as in the vendor specific, deep sleep state DS5 (box 34). In the described embodiment, the sequence of mode checks has been slightly altered to first check whether the client device 2 is in the ACPI S5 state (box 51b), before checking whether it is in the ACPI S3 state (box 51c).

As shown in Figure 5, the scaler 25 of the display device 3 is responsible for monitoring the power button 7 and for controlling the status LED 8. If a pressing of the power button 7 is recognized (box 36a) while the client device 2 is in the ACPI state S0 (box 32) and the display in the "display active" state (box 35), the scaler 25 sets a "shut down" command or flag to force the PC to be turned off (box 57a). This command is communicated via an internal communication path, such as an I²C bus to the power delivery controller 29. The power delivery controller 29 receives the command and translates the "shut down" command into a corresponding HID command (box 57b). This command is communicated using the USB control path 22 to a corresponding component of the client device 2. For example, the power management subsystem 13 of the client device 2 may receive a HID command corresponding to a HID command that would be generated by a keyboard with a dedicted power button as defined in the table below, and recognize it as a command to turn the client device 2 off. Accordingly, the client device 2 will enter the ACPI state S5 (box 33b).

As a consequence, the power consumption of the client device 2 will drop significantly, for example to a power consumption of below 1 W. The power delivery controller 29 will recognize that the power delivered to the client device 2 has dropped below this threshold and signal to the scaler 25 that only a minimum power is provided to the client device 2 (box 51). In response to receiving this information over the I²C bus, the scaler 25 will turn off the LED indicator to show that the client device 2 is in a "switched-off" ACPI state S5 (box 52).

Moreover, the scaler 25 will also enter the display sleep state (box 38) until the power button 7 is pressed again (box 36c). In this case, the scaler 25 will generate the USB resume signal to wake up the client device 2 (box 39). The client device 2 will therefore enter the ACPI state S0 as detailed above with regard to Figure 3 (box 32).

Alternatively, the scaler 25 may set an internal "sleep" command or flag. In this case another energy saving mode, such as the ACPI S3 mode, may be signaled by the power delivery controller 29 and/or selected by the power management subsystem 13 as described, for example, with reference to Figure 3 above. This is indicated in Figure 5 using the dashed line between box 57b and box 33a.

In the case that the client device 2 enters the ACPI state S3 (box 33a), this is also recognized by the power delivery controller 29. For example, the power delivery controller 29 may recognize that a power in the range between 1 and 5 W is consumed by the client device 2 (box 53). In response, it signals a corresponding control signal to the scaler 25, which sets the status LED 8 into a blinking mode to indicate the standby state of the client device 2 to the user (box 54) and then enters the display sleep state (box 38).

The following table defines a mapping of display device internal I²C commands to standardized USB HID commands as defined in the Device Class Definition for Human Interface Devices (HID) Firmware specification Version 1.1 and the corresponding HID Usage Table Version 1.11, both dated June 27, 2001, the HID Usage Table Version 1.12, dated October 28, 2004, and other USB control signals as defined, for example, in the USB Specification Revision 1.1, dated September 23, 1998. Those HID commands and USB control signals can be recognized by the power management subsystem 13 or system software of the client device 2 accordingly, without the need for a vendor specific driver software. However, it may be necessary to activate a function for allowing external devices in general and/or the display device 3 in particular to wake the client device 2. Moreover, the client device 2 and/or the display device 3 should power their respective USB interfaces in all modes, from which a re-activation of the normal operating mode is intended, i.e. at least in the ACPI S3 state, preferably also in the ACPI S5 state. The respective USB interface may need to be configured in the client device's firmware, such as a BIOS or UEFI program, to keep the USB interface alive in an energy saving state, in particular in the ACPI S5 state. Typical system software will search for application collections tagged with any HID device. When found, the usages generated by these collections will be treated as standard system keyboard input.

| FTS internal command | HID Command or other USB control signal | Description |
|---|---|---|
| "Lock PC" | "Win" + "L" key command | HID command emulating keyboard shortcut for locking the user interface |
| "Sleep" | System Sleep | Standardized or OEM specific System Control/Power Control Command (e.g. hex code 01 82 00 or 0A 82 00) |
| "Wake up" (if PC is in S3 state) | USB Resume signal | USB bus state as defined in section 7.1.7 of USB Specification Revision 1.1 |
| "Turn on"(if PC is in S4 or S5 state) | USB Resume signal | USB bus state as defined above |
| "Shut down" | System Power Down | Standardized or OEM specific System Control/Power Control Command (e.g. hex code 01 81 00 or 0A 81 00) |
| "Hibernate" | System Hibernate | Standardized or OEM specific System Control/Power Control Command (e.g. hex code 01 A8 00 or 0A A8 00) |

As an alternative to the USB Resume signal, a standardized or OEM specific System Control/Power Control Command for USB System Wake Up (e.g. hex code 01 83 00 or 0A 83 00) may be used to translate the internal "Wake Up" command. However, the USB Resume signal can be detected by the client device 2 without having an active USB data path established, as it is signaled on a lower, physical level of the USB protocol by changing the polarity of the D+ and D- data lines, whereas Power Control Commands can only be interpreted by the client device 2 if a data path is established, which is usually not the case if the client device 2 is in an energy saving state, such as the ACPI states S3 or S5.

It may be beneficial for the display device 3 simulating the keyboard or other HID device to make use of several ones of the control pages as defined in the HID Usage Tables. For example, in one state, the control page could be set to the keyboard/keypad page (0x07) to simulate standard keyboard behavior and transmit ordinary keystrokes such as the "Win" + "L" key. In another state, the control page could be set to the generic desktop page (0x01) to issue Power Control commands. However, in other implementations, all HID commands could be chosen from a single control page, such as the ordinal page (0x0A) to simplify the implementation of the corresponding controller state machine.

### List of References

- 1: computer system
- 2: client device
- 3: display device
- 4: data connection
- 5: interface (of the client device)
- 6: interface (of the display device)
- 7: power button
- 8: status LED
- 9: display screen
- 10: control circuitry
- 11: processor
- 12: graphics component
- 13: power management subsystem
- 14: presence sensor
- 21: USB interface
- 22: first control path
- 23: second control path
- 24: USB hub
- 25: scaler
- 26: user interface
- 27: power delivery path
- 28: load detection circuit
- 29: power delivery controller

## Claims

1. A computer system (1), comprising
- a client device (2), in particular a client computing device; and
- a display device (3), in particular a flat screen display device, operationally connected to the client device (2) by means of a Universal Serial Bus, USB, interface (21);
wherein
- the display device (3) comprises at least one power control device, in particular a power button (7) and/or a user presence sensor (14) configured to, upon activation of the at least one power control device, change an operating state of the client device (2) by sending at least one predefined Human Interface Device, HID, command or a resume signal over the USB interface (21) to the client device (2).

2. The computer system (1) according to claim 1, wherein the client device (2) and the display device (3) are coupled by means of a USB Type-C cable configured for delivery of data, a video signal and power or by means of a USB Type-A cable configured for delivery of data.

3. The computer system (1) according to claim 1 or 2, wherein the display device (3) further comprises at least one power indication device, in particular at least one status LED (8), configured to indicate a current operating state of the client device (2).

4. The computer system (1) according to claim 3, wherein the display device (3) provides an operating energy to the client device (2), and the display device (3) is configured to detect the current operating state of the client device (2) based on the amount of operating energy provided from the display device (3) to the client device (2).

5. The computer system (1) according to claim 3, wherein the client device (2) is configured to transmit at least one control signal to the display device (3), the at least one control signal indicating the current operating state of the client device (2).

6. The computer system (1) according to any one of the claims 1 to 5, wherein the display device (3) comprises a user presence sensor (14), and wherein the computer system (1) is configured to, upon detection of the absence of a user by the presence sensor (14), lock the client device (2), and/or, upon detection of the presence of the user by the presence sensor, wake-up the client device (2) or display a log-in screen.

7. A client device (2), in particular for use in the computer system (1) according to claim 1, comprising:
- at least one processor (11) for executing program code;
- a graphics component (12) for generating graphical output to be displayed based on the program code executed by the at least one processor (11);
- a power management subsystem (13) configured to switch the client device (2) into different operating states, including at least one normal operating state, in which the at least one processor is supplied with an operating energy, and at least one energy saving state, in which the at least one processor is not supplied with the operating energy or supplied with a reduced amount of operating energy; and
- at least one Universal Serial Bus, USB, interface (21) for connecting the client device (2) to an external display device (3);
wherein
- the USB interface (21) is configured to receive a first control signal comprising at least one predefined Human Interface Device, HID, command or a resume signal according to the Universal Serial Bus, USB, protocol from the external display device (3) indicating a request for the power management subsystem (13) to change the operating state of the client device (2); and
- the power management subsystem (13) is configured to control the operating state of the client device (2) based on the received first control signal; and
- the power management subsystem (13) and/or the USB interface (21) are further configured to transmit a second control signal to the external display device (3) indicating a change in a current operating state of the client device (2).

8. The client device (2) according to claim 7, wherein the at least one HID command comprises one of the following: a HID command emulating a keyboard shortcut or a Power Control Command according to a HID Usage Table.

9. The client device (2) according to claims 7 or 8, wherein a firmware of the client device and/or the USB interface (21) are further configured to detect whether a display configured to transmit the first control signal and to receive the second control signal is connected externally to the client device via the at least one USB interface (21), before receiving the first control signal and/or transmitting the second control signal.

10. A display device (3), in particular for use in the computer system (1) according to claim 1, comprising:
- a display screen (9) for displaying graphical output;
- at least one power control device, in particular a power button (7) and/or a user presence sensor (14);
- at least one USB interface (21) for connecting the display device (3) to an external client device (2); and
- control circuitry (10), operationally connected to the at least one power control device and the at least one USB interface (21);
wherein
- the control circuitry (10) is configured to monitor the at least one power control device and, upon activation of the at least one power control device, to transmit a first control signal comprising at least one predefined Human Interface Device, HID, command or a resume signal according to the Universal Serial Bus, USB, protocol to the client device (2) indicating a request to change the operating state of the client device (2).

11. The display device (3) according to claim 10, wherein the control circuitry (10) is configured to determine how long the power control device was actuated, to send a first HID command for activation of a first energy saving state of the external client device (2), if the power control device was actuated for less than a first period, and to send a second HID command for activation of a second energy saving state of the external client device (2), if the power control device was actuated for more than the first period.

12. The display device (3) according to claim 10 or 11, further comprising at least one power indication device, in particular at least one status LED (8), connected to the control circuitry (10), wherein the control circuitry (10) is further configured to detect the current operating state of the client device (2) and to indicate the detected operating state of the client device (2) by using the at least one power indication device of the display device (3).

13. The display device (3) according to claim 12, wherein the current operating state of the client device (2) is detected by means of detecting a power consumption of the client device (2).

14. The display device (3) according to claim 13, further comprising a power delivery controller (29) configured to provide an operating energy for the client device (2) to the at least one USB interface (21), wherein the current operating state of the client device (2) is detected by comparing the operating energy provided to the at least one USB interface (21) with at least one threshold value.

15. The display device (3) according to claim 12 or 14, wherein a switched-off state of the client device (2) is detected in the case that the operating energy provided to the at least one USB interface (21) is below a first threshold, an energy saving state of the client device is detected in the case that the operating energy is equal to or above the first threshold and is equal to or below a second threshold, and a normal operating state of the client device (2) is detected in the case that the operating energy is above the second threshold.

16. The display device (3) according to claim 12, wherein the current operating state of the client device (2) is detected by receiving a second control signal, in particular a further HID command or a vendor defined message, VDM, wherein the second control signal is received via the at least one USB interface (21) from the client device (2) and indicates the current operating state of the client device (2).

17. The display device according to claim 16, wherein the control circuitry (10) is further configured to selectively switch the at least one display screen (9) into at least one display sleep state in the case that the second control signal indicates that the client device (2) has entered an energy saving state.

18. The display device (3) according to any one of claims 10 to 17, wherein the control circuitry (10) comprises a scaler (25) and a USB hub (24) or a power delivery controller (29) connected to the scalar (25) by an internal control interface, wherein the scaler (25) is configured to provide an internal command to the USB hub (24) or the power delivery controller (29), and the USB hub (24) or the power delivery controller (29) is configured to translate the internal command into the first control signal send externally to the client device (2).

## Patentansprüche

1. Computersystem (1), umfassend:
- ein Client-Gerät (2), insbesondere ein Client-Rechengerät; und
- ein Anzeigegerät (3), insbesondere ein Flachbildschirmanzeigegerät, das mittels einer Universal Serial Bus, USB, -Schnittstelle (21) in Wirkverbindung an das Client-Gerät (2) angeschlossen ist, wobei
- das Anzeigegerät (3) mindestens eine Energiesteuerungsvorrichtung, insbesondere eine Netzschaltertaste (7) und/oder einen Benutzeranwesenheitssensor (14) umfasst, die bzw. der dazu konfiguriert ist, bei einer Aktivierung der mindestens einen Energiesteuerungsvorrichtung, einen Betriebszustand des Client-Geräts (2) zu verändern, indem mindestens ein vordefinierter Human Interface Device, HID, -Befehl oder ein Wiederaufnahmesignal über die USB-Schnittstelle (21) an das Client-Gerät (2) geschickt wird.

2. Computersystem (1) nach Anspruch 1, wobei das Client-Gerät (2) und das Anzeigegerät (3) mittels eines USB-Typ C-Kabels, das zur Lieferung von Daten, eines Videosignals und Strom konfiguriert ist, oder mittels eines USB-Typ A-Kabels gekoppelt sind, das zur Lieferung von Daten konfiguriert ist.

3. Computersystem (1) nach Anspruch 1 oder 2, wobei das Anzeigegerät (3) darüber hinaus mindestens ein Energieanzeigegerät, insbesondere mindestens eine Status-LED (8) umfasst, die dazu konfiguriert ist, einen momentanen Betriebszustand des Client-Geräts (2) anzugeben.

4. Computersystem (1) nach Anspruch 3, wobei das Anzeigegerät (3) dem Client-Gerät (2) eine Betriebsenergie bereitstellt und das Anzeigegerät (3) dazu konfiguriert ist, den momentanen Betriebszustand des Client-Geräts (2) auf Grundlage der Menge an Betriebsenergie zu erfassen, die dem Client-Gerät (2) vom Anzeigegerät (3) bereitgestellt wird.

5. Computersystem (1) nach Anspruch 3, wobei das Client-Gerät (2) dazu konfiguriert ist, mindestens ein Steuersignal an das Anzeigegerät (3) zu übertragen, wobei das mindestens eine Steuersignal den momentanen Betriebszustand des Client-Geräts (2) angibt.

6. Computersystem (1) nach einem der Ansprüche 1 bis 5, wobei das Anzeigegerät (3) einen Benutzeranwesenheitssensor (14) umfasst, und wobei das Computersystem (1) dazu konfiguriert ist, beim Erfassen der Abwesenheit eines Benutzers durch den Anwesenheitssensor (14), das Client-Gerät (2) zu sperren und/oder beim Erfassen der Anwesenheit des Benutzers durch den Anwesenheitssensor das Client-Gerät (2) aufzuwecken oder einen Anmeldebildschirm einzublenden.

7. Client-Gerät (2), insbesondere zur Verwendung in dem Computersystem (1) nach Anspruch 1, umfassend:
- mindestens einen Prozessor (11) zum Ausführen eines Programmcodes;
- eine Grafikkomponente (12), um eine anzuzeigende grafische Ausgabe auf Grundlage des durch den mindestens einen Prozessor (11) ausgeführten Programmcodes zu generieren;
- ein Energiemanagementuntersystem (13), das dazu konfiguriert ist, das Client-Gerät (2) in verschiedene Betriebszustände, darunter mindestens einen normalen Betriebszustand, in dem der mindestens eine Prozessor mit einer Betriebsenergie versorgt wird, und mindestens einen Energieeinsparungszustand zu schalten, in dem der mindestens eine Prozessor nicht mit der Betriebsenergie versorgt wird oder mit einer reduzierten Menge an Betriebsenergie versorgt wird; und
- mindestens eine Universal Serial Bus, USB, - Schnittstelle (21)), um das Client-Gerät (2) an ein externes Anzeigegerät (3) anzuschließen;
wobei
- die USB-Schnittstelle (21) dazu konfiguriert ist, ein erstes Steuersignal zu empfangen, das mindestens einen vordefinierten Human Interface Device, HID, -Befehl oder ein Wiederaufnahmesignal gemäß dem Universal Serial Bus, USB, - Protokoll von dem externen Anzeigegerät (3) umfasst, der bzw. das eine Anforderung für das Energiemanagementuntersystem angibt, den Betriebszustand des Client-Geräts (2) zu verändern; und
- das Energiemanagementuntersystem (13) dazu konfiguriert ist, den Betriebszustand des Client-Geräts (2) auf Grundlage des empfangenen ersten Steuersignals zu steuern; und
- das Energiemanagementuntersystem (13) und/oder die USB-Schnittstelle (21) darüber hinaus dazu konfiguriert ist bzw. sind, ein zweites Steuersignal an das externe Anzeigegerät (3) zu übertragen, das eine Veränderung in einem momentanen Betriebszustand des Client-Geräts (2) angibt.

8. Client-Gerät (2) nach Anspruch 7, wobei der mindestens eine HID-Befehl eines der folgenden Elemente umfasst: einen HID-Befehl, der eine Tastenkombination nachahmt, oder einen Energiesteuerungsbefehl gemäß einer HID-Nutzungstabelle.

9. Client-Gerät (2) nach den Ansprüchen 7 oder 8, wobei eine Firmware des Client-Geräts und/oder die USB-Schnittstelle (21) darüber hinaus dazu konfiguriert ist bzw. sind, zu erfassen, ob eine Anzeige, die dazu konfiguriert ist, das erste Steuersignal zu übertragen und das zweite Steuersignal zu empfangen, extern über die mindestens eine USB-Schnittstelle (21) an das Client-Gerät angeschlossen ist, bevor das erste Steuersignal empfangen und/oder das zweite Steuersignal empfangen wird bzw. werden.

10. Anzeigegerät (3), insbesondere zur Verwendung im Computersystem (1) nach Anspruch 1, umfassend:
- einen Anzeigebildschirm (9), um einen grafische Ausgabe anzuzeigen;
- mindestens eine Energiesteuerungsvorrichtung, insbesondere eine Netzschaltertaste (7) und/oder einen Benutzeranwesenheitssensor (14);
- mindestens eine USB-Schnittstelle (21), um das Anzeigegerät (3) an ein externes Client-Gerät (2) anzuschließen; und
- eine Steuerschaltung (10), die in Wirkverbindung an die mindestens eine Energiesteuerungsvorrichtung und die mindestens eine USB-Schnittstelle (21) angeschlossen ist;
wobei
- die Steuerschaltung (10) dazu konfiguriert ist, die mindestens eine Energiesteuerungsvorrichtung zu überwachen und beim Aktivieren der mindestens einen Energiesteuerungsvorrichtung ein erstes Steuersignal, das mindestens einen vordefinierten Human Interface Device, HID, -Befehl oder ein Wiederaufnahmesignal gemäß dem Universal Serial Bus, USB, - Protokoll umfasst, an das Client-Gerät (2) zu übertragen, wobei das erste Steuersignal eine Anforderung angibt, den Betriebszustand des Client-Geräts (2) zu ändern.

11. Anzeigegerät (3) nach Anspruch 10, wobei die Steuerschaltung (10) dazu konfiguriert ist, zu bestimmen, wie lange die Energiesteuerungsvorrichtung betätigt wurde, einen ersten HID-Befehl zur Aktivierung eines ersten Energieeinsparungszustands des externen Client-Geräts (2) zu senden, wenn die Energiesteuerungsvorrichtung weniger lang als eine erste Dauer betätigt wurde, und einen zweiten HID-Befehl zu Aktivierung eines zweiten Energieeinsparungszustands des externen Client-Geräts (2) zu senden, wenn die Energiesteuerungsvorrichtung länger als die erste Dauer betätigt wurde.

12. Anzeigegerät (3) nach Anspruch 10 oder 11, darüber hinaus mindestens ein Energieanzeigegerät, insbesondere mindestens eine Status-LED (8) umfassend, die an die Steuerschaltung (10) angeschlossen ist, wobei die Steuerschaltung (10) darüber hinaus dazu konfiguriert ist, den momentanen Betriebszustand des Client-Geräts (2) zu erfassen und den erfassten Betriebszustand des Client-Geräts (2) anzugeben, indem das mindestens eine Energieanzeigegerät des Anzeigegeräts (3) verwendet wird.

13. Anzeigegerät (3) nach Anspruch 12, wobei der momentane Betriebszustand des Client-Geräts (2) mittels Erfassen eines Energieverbrauchs des Client-Geräts (2) erfasst wird.

14. Anzeigegerät (3) nach Anspruch 13, darüber hinaus eine Energieabgabesteuereinheit (29) umfassend, die dazu konfiguriert ist, der mindestens einen USB-Schnittstelle (21) eine Betriebsenergie für das Client-Gerät (2) bereitzustellen, wobei der momentane Betriebszustand des Client-Geräts (2) dadurch erfasst wird, dass die Betriebsenergie, die der mindestens einen USB-Schnittstelle (21) bereitgestellt wird, mit mindestens einem Schwellenwert verglichen wird.

15. Anzeigegerät (3) nach Anspruch 12 oder 14, wobei ein Abschaltzustand des Client-Geräts (2) in dem Fall erfasst wird, dass die Betriebsenergie, die der mindestens einen USB-Schnittstelle (21) bereitgestellt wird, unter einem ersten Schwellenwert liegt, eine Energieeinsparungszustand des Client-Geräts in dem Fall erfasst wird, dass die Betriebsenergie gleich dem ersten Schwellenwert ist oder über diesem liegt und gleich einem zweiten Schwellenwert ist oder unter diesem liegt, und ein normaler Betriebszustand des Client-Geräts (2) in dem Fall erfasst wird, dass die Betriebsenergie über dem zweiten Schwellenwert liegt.

16. Anzeigegerät (3) nach Anspruch 12, wobei der momentane Betriebszustand des Client-Geräts (2) erfasst wird, indem ein zweites Steuersignal, insbesondere ein weiterer HID-Befehl oder eine anbieterdefinierte Nachricht, VDM, empfangen wird, wobei das zweite Steuersignal über die mindestens eine USB-Schnittstelle (21) vom Client-Gerät (2) her empfangen wird und den momentanen Betriebszustand des Client-Geräts (2) angibt.

17. Anzeigegerät nach Anspruch 16, wobei die Steuerschaltung (10) darüber hinaus dazu konfiguriert ist, den mindestens einen Anzeigebildschirm (9) selektiv in mindestens einen Anzeigeruhezustand in dem Fall zu schalten, dass das zweite Steuersignal angibt, dass das Client-Gerät (2) in einen Energieeinsparungszustand eingetreten ist.

18. Anzeigegerät (3) nach einem der Ansprüche 10 bis 17, wobei die Steuerschaltung (10) einen Scaler (25) und einen USB-Hub (24) oder eine Energieabgabesteuereinheit (29) umfasst, die durch eine interne Steuerschnittstelle an den Scaler (25) angeschlossen ist, wobei der Scaler (25) dazu konfiguriert ist, dem USB-Hub (24) oder der Energieabgabesteuereinheit (29) einen internen Befehl bereitzustellen, und der USB-Hub (24) oder die Energieabgabesteuereinheit (29) dazu konfiguriert ist, den internen Befehl in das erste Steuersignal zu übersetzen und extern an das Client-Gerät (2) zu senden.

## Revendications

1. Système informatique (1), comprenant
- un dispositif client (2), en particulier un dispositif informatique client ; et
- un dispositif d'affichage (3), en particulier un dispositif d'affichage à écran plat, connecté opérationnellement au dispositif client (2) moyennant une interface à bus sériel universel, USB (21) ;
sachant que
- le dispositif d'affichage (3) comprend au moins un dispositif de commande de puissance, en particulier un bouton de puissance (7) et/ou un capteur de présence d'utilisateur (14) configuré pour, en cas d'activation de l'au moins un dispositif de commande de puissance, changer un état de fonctionnement du dispositif client (2) en envoyant au moins une consigne prédéfinie de dispositif à interface humaine, HID, ou un signal de reprise via l'interface USB (21) au dispositif client (2).

2. Le système informatique (1) selon la revendication 1, sachant que le dispositif client (2) et le dispositif d'affichage (3) sont couplés moyennant un câble USB de type C configuré pour délivrer des données, un signal vidéo et de la puissance ou moyennant un câble USB de type A configuré pour délivrer des données.

3. Le système informatique (1) selon la revendication 1 ou 2, sachant que le dispositif d'affichage (3) comprend en outre au moins un dispositif d'indication de puissance, en particulier au moins une LED d'état (8), configuré pour indiquer un état de fonctionnement en cours du dispositif client (2).

4. Le système informatique (1) selon la revendication 3, sachant que le dispositif d'affichage (3) fournit une énergie de fonctionnement au dispositif client (2), et le dispositif d'affichage (3) est configuré pour détecter l'état de fonctionnement en cours du dispositif client (2) sur la base de la quantité d'énergie de fonctionnement fournie depuis le dispositif d'affichage (3) au dispositif client (2).

5. Le système informatique (1) selon la revendication 3, sachant que le dispositif client (2) est configuré pour transmettre au moins un signal de commande au dispositif d'affichage (3), l'au moins un signal de commande indiquant l'état de fonctionnement en cours du dispositif client (2).

6. Le système informatique (1) selon l'une quelconque des revendications 1 à 5, sachant que le dispositif d'affichage (3) comprend un capteur de présence d'utilisateur (14), et sachant que le système informatique (1) est configuré pour, en cas de détection de l'absence d'un utilisateur par le capteur de présence (14), verrouiller le dispositif client (2), et/ou, en cas de détection de la présence de l'utilisateur par le capteur de présence, réveiller le dispositif client (2) ou afficher un écran de connexion.

7. Dispositif client (2), en particulier destiné à être utilisé dans le système informatique (1) selon la revendication 1, comprenant :
- au moins un processeur (11) destiné à exécuter un code de programme ;
- un composant graphique (12) destiné à générer une sortie graphique à afficher sur la base du code de programme exécuté par l'au moins un processeur (11) ;
- un sous-système de gestion de puissance (13) configuré pour commuter le dispositif client (2) dans différents états de fonctionnement, incluant au moins un état de fonctionnement normal, dans lequel l'au moins un processeur est alimenté en une énergie de fonctionnement, et au moins un état d'économie d'énergie, dans lequel l'au moins un processeur n'est pas alimenté en l'énergie de fonctionnement ou est alimenté en une quantité réduite d'énergie de fonctionnement ; et
- au moins une interface à bus sériel universel, USB (21) destinée à connecter le dispositif client (2) à un dispositif d'affichage externe (3) ;
sachant que
- l'interface USB (21) est configurée pour recevoir un premier signal de commande comprenant au moins une consigne prédéfinie de dispositif à interface humaine, HID, ou un signal de reprise conformément au protocole de bus sériel universel, USB, depuis le dispositif d'affichage externe (3), indiquant une demande que le sous-système de gestion de puissance (13) change l'état de fonctionnement du dispositif client (2) ; et
- le sous-système de gestion de puissance (13) est configuré pour commander l'état de fonctionnement du dispositif client (2) sur la base du premier signal de commande reçu ; et
- le sous-système de gestion de puissance (13) et/ou l'interface USB (21) sont en outre configurés pour transmettre au dispositif d'affichage externe (3) un deuxième signal de commande indiquant un changement dans un état de fonctionnement en cours du dispositif client (2).

8. Le dispositif client (2) selon la revendication 7, sachant que l'au moins une consigne HID comprend l'un des termes suivants : une consigne HID émulant un raccourci clavier ou une consigne de commande de puissance conformément à un tableau d'utilisation HID.

9. Le dispositif client (2) selon les revendications 7 ou 8, sachant qu'un micrologiciel du dispositif client et/ou l'interface USB (21) sont en outre configurés pour détecter si un affichage configuré pour transmettre le premier signal de commande et recevoir le deuxième signal de commande est connecté par voie externe au dispositif client via l'au moins une interface USB (21), avant de recevoir le premier signal de commande et/ou de transmettre le deuxième signal de commande.

10. Dispositif d'affichage (3), en particulier destiné à être utilisé dans le système informatique (1) selon la revendication 1, comprenant :
- un écran d'affichage (9) destiné à afficher une sortie graphique ;
- au moins un dispositif de commande de puissance, en particulier un bouton de puissance (7) et/ou un capteur de présence d'utilisateur (14) ;
- au moins une interface USB (21) destinée à connecter le dispositif d'affichage (3) à un dispositif client externe (2) ; et
- un circuit de commande (10), connecté opérationnellement à l'au moins un dispositif de commande de puissance et à l'au moins une interface USB (21) ;
sachant que
- le circuit de commande (10) est configuré pour surveiller l'au moins un dispositif de commande de puissance et, en cas d'activation de l'au moins un dispositif de commande de puissance, transmettre un premier signal de commande comprenant au moins une consigne prédéfinie de dispositif à interface humaine, HID, ou un signal de reprise conformément au protocole de bus sériel universel, USB, au dispositif client (2), indiquant une demande de changer l'état de fonctionnement du dispositif client (2).

11. Le dispositif d'affichage (3) selon la revendication 10, sachant que le circuit de commande (10) est configuré pour déterminer pendant combien de temps le dispositif de commande de puissance a été actionné, envoyer une première consigne HID pour activation d'un premier état d'économie d'énergie du dispositif client externe (2), si le dispositif de commande de puissance a été actionné pendant moins d'une première période, et envoyer une deuxième consigne HID pour activation d'un deuxième état d'économie d'énergie du dispositif client externe (2), si le dispositif de commande de puissance a été actionné pendant plus de la première période.

12. Le dispositif d'affichage (3) selon la revendication 10 ou 11, comprenant en outre au moins un dispositif d'indication de puissance, en particulier au moins une LED d'état (8), connecté au circuit de commande (10), sachant que le circuit de commande (10) est en outre configuré pour détecter l'état de fonctionnement en cours du dispositif client (2) et indiquer l'état de fonctionnement détecté du dispositif client (2) moyennant l'au moins un dispositif d'indication de puissance du dispositif d'affichage (3).

13. Le dispositif d'affichage (3) selon la revendication 12, sachant que l'état de fonctionnement en cours du dispositif client (2) est détecté par détection d'une consommation de puissance du dispositif client (2).

14. Le dispositif d'affichage (3) selon la revendication 13, comprenant en outre un dispositif de commande de fourniture de puissance (29) configuré pour fournir une énergie de fonctionnement pour le dispositif client (2) à l'au moins une interface USB (21), sachant que l'état de fonctionnement en cours du dispositif client (2) est détecté par comparaison de l'énergie de fonctionnement fournie à l'au moins une interface USB (21) avec au moins une valeur seuil.

15. Le dispositif d'affichage (3) selon la revendication 12 ou 14, sachant qu'un état d'arrêt du dispositif client (2) est détecté dans le cas où l'énergie de fonctionnement fournie à l'au moins une interface USB (21) est inférieure à un premier seuil, un état d'économie d'énergie du dispositif client est détecté dans le cas où l'énergie de fonctionnement est égale ou supérieure au premier seuil et est égale ou inférieure à un deuxième seuil, et un état de fonctionnement normal du dispositif client (2) est détecté dans le cas où l'énergie de fonctionnement est supérieure au deuxième seuil.

16. Le dispositif d'affichage (3) selon la revendication 12, sachant que l'état de fonctionnement en cours du dispositif client (2) est détecté par réception d'un deuxième signal de commande, en particulier d'une consigne HID supplémentaire ou d'un message défini par un vendeur, VDM, sachant que le deuxième signal de commande est reçu via l'au moins une interface USB (21) depuis le dispositif client (2) et indique l'état de fonctionnement en cours du dispositif client (2).

17. Le dispositif d'affichage selon la revendication 16, sachant que le circuit de commande (10) est en outre configuré pour commuter sélectivement l'au moins un écran d'affichage (9) dans au moins un état de veille d'affichage dans le cas où le deuxième signal de commande indique que le dispositif client (2) est passé dans un état d'économie d'énergie.

18. Le dispositif d'affichage (3) selon l'une quelconque des revendications 10 à 17, sachant que le circuit de commande (10) comprend un dispositif de mise à l'échelle (25) et un concentrateur USB (24) ou un dispositif de commande de fourniture de puissance (29) connecté au dispositif de mise à l'échelle (25) par une interface de commande interne, sachant que le dispositif de mise à l'échelle (25) est configuré pour fournir une consigne interne au concentrateur USB (24) ou au dispositif de commande de fourniture de puissance (29), et le concentrateur USB (24) ou le dispositif de commande de fourniture de puissance (29) est configuré pour transposer la consigne interne en le premier signal de commande envoyé par voie externe au dispositif client (2).
